Europäisches Patentamt

European Patent Office

Office européen des brevets

(19)

(11) EP 0 693 524 B1

(12) EUROPEAN PATENT SPECIFICATION

(45) Date of publication and mention
of the grant of the patent:
**10.06.1998 Bulletin 1998/24**

(51) Int Cl.[6]: **C08J 5/18**, C08F 110/06,
C08L 23/12

(21) Application number: **95111231.7**

(22) Date of filing: **18.07.1995**

(54) **Polypropylene resin and film prepared therefrom**

Polypropylenharz und daraus hergestellte Folie

Résine de polypropylène et film obtenu à partir de celle-ci

(84) Designated Contracting States:
**DE FR GB IT**

(30) Priority: **20.07.1994 JP 168150/94**

(43) Date of publication of application:
**24.01.1996 Bulletin 1996/04**

(73) Proprietor: **IDEMITSU PETROCHEMICAL CO.,
LTD.
Minato-ku, Tokyo 108 (JP)**

(72) Inventors:
 • **Seta, Yasushi,
c/o Idemitsu Petrochemical Co., Ltd
Ichihara-shi, Chiba-ken (JP)**
 • **Nakatsuka, Satoshi,
c/o Idemitsu Petrochem. Co.Ltd
Ichihara-shi, Chiba-ken (JP)**
 • **Tanaka, Yoshikatsu,
c/o Idemitsu Petrochem. Co.Ltd
Ichihara-shi, Chiba-ken (JP)**
 • **Suetsugu, Yoshiyuki, c/o Idemitsu Petrochem.
Ichihara-shi, Chiba-ken (JP)**

(74) Representative: **Türk, Gille, Hrabal, Leifert
Brucknerstrasse 20
40593 Düsseldorf (DE)**

(56) References cited:
**EP-A- 0 114 391            EP-A- 0 115 940
EP-A- 0 480 190            WO-A-93/20115
GB-A- 2 033 409            GB-A- 2 124 240**

**Description**

FIELD OF THE INVENTION

The present invention relates to a polypropylenic resin for a film and a film prepared therefrom. More particularly, the present invention relates to a polypropylenic resin which provides a film having improved transparency and impact resistance, and sufficient slipping property and anti-blocking property while proper characteristics of a polypropylenic film are not adversely affected, and moreover, exhibiting very small change in the properties even when the film is prepared under a high speed condition. The present invention also relates to a film which is prepared by using the resin described above as a base material and has an excellent quality in that the film has excellent transparency, impact resistance, slipping property, and anti-blocking property.

PRIOR ART OF THE INVENTION

Polypropylene resins have widely been used as general use resins in various fields. Polypropylene resins are formed into films by a T-die casting process, a blown film extrusion process, or the like, and the films formed are widely used in many applications, such as packaging materials used for foods, cloths, drugs, sundry goods, and the like, building materials, such as laminating materials for decoration boards, veneer boards, metal plates, and the like, mold releasing materials in molding of various types of decoration boards, book covers, and the like.

In recent years, films of a larger width have been produced at a higher speed to achieve increase in productivity. However, the production of a film at a higher speed causes a problem that qualities of the film, such as transparency and impact resistance, inevitably deteriorate by the change in conditions of film formation.

For solving the problem described above, improvements in the process of film formation, such as decreasing surface temperature of a chill roll by decreasing temperature of cooling water, cooling extruded molten resin directly with water without using a chill roll, and the like, have been attempted. However, sufficient effect has not been achieved by the improvements in the process because influence of fluctuation in the temperature and the flow rate of the cooling water cannot be avoided, even though the effect has been found to some degree.

Improvement in the process has also been attempted by other methods, such as (1) a method in which a crystalline polypropylene used as a material is improved by decomposition with heat or by using an organic peroxide, (2) a method in which molecular weight distribution of a resin is made narrower, particularly with elimination of high molecular weight fractions, by adjusting a catalyst or a process of polymerization in order to decrease stress during film formation under a high speed condition, and (3) a method in which a small amount of a nucleating agent of crystallization is added to a crystalline polypropylene having a relatively narrow molecular weight distribution. However, these methods do not show sufficient effect even though the effect can be found to a limited degree.

A ratio ($M_w/M_n$) of a weight-average molecular weight ($M_w$) and a number-average molecular weight ($M_n$) obtained by gel permeation chromatography (GPC) has heretofore been used for evaluation of a molecular weight distribution. However, transparency and impact resistance do not show sufficient correlation to $M_w/M_n$ because transparency and impact resistance depend particularly on contents of high molecular weight components. Therefore, transparency and impact resistance do not show good correlation to $M_w/M_n$ obtained by GPC, and an improved method for evaluation of the molecular weight distribution is required.

E.g. EP-A- 0 114 391 discloses a flexible propylene polymer obtained by gas-phase polymerization wherein in the steric pentad fraction the [mmmm] fraction is from 0.45 to 0.85.

SUMMARY OF THE INVENTION

An object of the present invention is to provide a polypropylenic resin which provides a film having improved transparency and impact resistance, and sufficient slipping property and anti-blocking property while proper characteristics of a polypropylenic film are not adversely affected, and moreover, exhibiting very small change in the properties even when the film is prepared under a high speed condition.

Another object of the present invention is to provide a film which is prepared by using the resin described above as a base material and has an excellent quality in that the film has excellent transparency, impact resistance, slipping property, and anti-blocking property.

The present invention provides a polypropylenic resin which is used for preparing a film and has:

(1) a content of an isotactic pentad fraction as an index of stereo-regularity and a content of a n-heptane insoluble fraction which are in a range of 85.0 to 92.0 % by mol and in a range of 93.0 to 97.0 % by weight, respectively, and satisfy a relation expressed by an equation:

$$0.750P+27.125 < H$$

wherein P indicates the content of an isotactic pentad fraction in % by mol and H indicates the content of a n-heptane insoluble fraction in % by weight, and

(2) a melt index which is in a range of 1 to 20 g/10 minutes and satisfies a relation expressed by an equation:

$$\tau \leq 0.65\text{-}0.025MI$$

wherein MI indicates the melt index, and $\tau$ indicates a relaxation time in second obtained by a frequency dispersion measurement at a temperature of 175°C at a frequency of $\omega_0=10^0$ rad/sec.

The present invention also provides a film prepared from the polypropylenic resin described above.

The present invention also provides a film which is prepared from the polypropylenic resin described above and has:

(1a) a content of an isotactic pentad fraction as an index of stereo-regularity and a content of a n-heptane insoluble fraction which are in a range of 85.0 to 92.0 % by mol and in a range of 86.0 to 97.0 % by weight, respectively, and satisfies a relation expressed by an equation:

$$0.750P+26.000 < H$$

wherein P indicates the content of an isotactic pentad fraction in % by mol and H indicates the content of a n-heptane insoluble fraction in % by weight, and

(2a) a melt index which is in a range of 1 to 25 g/10 minutes and satisfies a relation expressed by an equation:

$$\tau \leq 0.63\text{-}0.025MI$$

wherein MI indicates the melt index, and $\tau$ indicates a relaxation time in second obtained by a frequency dispersion measurement at a temperature of 175°C at a frequency of $\omega_0=10^0$ rad/sec.

Other and further objects, features and advantages of the invention will appear more fully from the following description.

DETAILED DESCRIPTION OF THE INVENTION

In the course of study to accomplish the above object, the present inventors have discovered that crystallinity of a polypropylene resin can be adjusted into a desirable range when stereoregularity and a content of n-heptane insoluble fraction are adjusted into a specified range, and that degree of crystallization of a film can be adjusted into a desirable range, crystallization of a film can be controlled so that a desirable crystal form of the film can be obtained, orientation of the chain is decreased, and thus a film of an excellent quality can be obtained even when the film is produced under a high speed condition, when stress during film formation is decreased by adjusting a relaxation time $\tau$ and a melt index while they are kept in a specific relation. The present invention has been completed on the basis of the discovery.

The present invention is described in detail in the following.

The polypropylenic resin of the present invention has the properties described in the following.

It is necessary in the present invention that (1) the polypropylenic resin has a content of an isotactic pentad fraction as an index of stereoregularity and a content of a n-heptane insoluble fraction which are in a range of 85.0 to 92.0 % by mol and in a range of 93.0 to 97.0 % by weight, respectively, and satisfy a relation expressed by equation (I):

$$0.750P + 27.125 < H \tag{I}$$

wherein P indicates the content of an isotactic pentad fraction in % by mol and H indicates the content of a n-heptane insoluble fraction in % by weight. When the content of an isotactic pentad fraction is less than 85.0 % by mol, stiffness and anti-blocking property of a film prepared from the resin are inferior. When the content of an isotactic pentad fraction is more than 92.0 % by mol, impact resistance and slipping property of a film prepared from the resin are decreased.

The isotactic pentad fraction is a fraction of the isotactic linkage in a pentad unit in the molecular chain of the polypropylenic resin, and the content thereof can be measured according to the method described in Macromolecules, Volume 8, Page 687 (1975).

In the present invention, the content of an isotactic pentad fraction is obtained by measurement of $^{13}$C-NMR using a JNM-EX400-type NMR apparatus produced by Nippon Denshi Co., Ltd., in the solvent of 1,2,4-trichlorobenzene / benzene-$d_6$ (9/1) at the temperature of 130°C with the number of accumulation of 4,000 at the pulse angle of 45° and the pulse interval of 4 seconds.

When the content of a n-heptane insoluble fraction is less than 93.0 % by weight, stiffness and anti-blocking property of a film obtained are inferior. When the content of a n-heptane insoluble fraction is more than 97.0 % by mol, impact resistance and slipping property of a film obtained is decreased. The content of a n-heptane insoluble fraction is obtained according to the following method: 3 g of pellets of the polypropylenic resin pulverized to a size passing a 2 mm mesh screen are placed in a cylindrical filter paper, and extracted using a Soxhlet extractor with 160 ml of n-heptane placed in a flat-bottom flask for 6 hours under the condition of a refluxing frequency of once in 5 minutes; thereafter, n-heptane was recovered using an evaporator; the residue is dried in a vacuum drying oven until a constant weight is achieved, to obtain the amount of the n-heptane soluble fraction (S); and the content of a n-heptane insoluble fraction (H) is obtained from S according to the following equation:

$$H(\text{\% by weigh})=100(A-S)/A$$

wherein A indicates a weight of the pulverized pellets before the extraction.

When the content of a n-heptane insoluble fraction is less than (0.750P + 27.125), there is the possibility that a film prepared from the resin has insufficient impact resistance and slipping property.

It is also necessary in the present invention that (2) the polypropylenic resin has a melt index which is in a range of 1 to 20 g/10 minutes and satisfies a relation expressed by equation (II):

$$\tau \le 0.65\text{-}0.025\text{MI} \qquad\qquad (II)$$

wherein MI indicates the melt index, and $\tau$ indicates a relaxation time in second obtained by a frequency dispersion measurement at a temperature of 175°C at a frequency of $\omega_0 = 10^0$ rad/sec. When the melt index has a value at the outside of the range specified above, the property for film formation deteriorates. For exhibiting a still better property for film formation, the melt index is preferably in the range of 2 to 15 g/10 minutes, more preferably in the range of 3 to 10 g/10 minutes. The melt index in the present invention is obtained by measurement according to the method of Japanese Industrial Standard K-7210 at the temperature of 230°C under the load of 2,160 g.

When the relaxation time has a value of more than (0.65 - 0.025 MI), transparency and impact resistance of a film prepared from the resin are decreased remarkably when the film is formed under a high speed condition, and the objects of the present invention are not achieved.

When the melt index and the relaxation time satisfy the relation expressed by the following equation:

$$\tau \le 0.60 - 0.025\text{MI}$$

a film having remarkably excellent transparency can be obtained.

In the present invention, the relaxation time is the value obtained at the frequency of $\omega_0 = 10^0$ rad/sec in measurement of frequency dispersion using a rotating rheometer produced by Rheometrix Company with a cone plate (cone angle = 0.1 rad; 25 mm$\phi$) at the temperature of 175°C. When a complex modulus $G^*(i\omega)$ measured with pellets of a polypropylenic resin is defined as $\sigma^*/\gamma^*$ using stress $\sigma^*$ and strain $\gamma^*$, $\tau$ can be obtained by using the following equations:

$$G^*(i\omega) = \sigma^*/\gamma^* = G'(\omega) + iG''(\omega)$$

$$\tau(\omega) = G'(\omega)/\omega G''(\omega)$$

wherein $G'(\omega)$ is a storage modulus and $G''(\omega)$ is a loss modulus.

To achieve the objects of the present invention more effectively, it is preferred that the polypropylenic resin has a content of an isotactic pentad fraction and a content of a n-heptane insoluble fraction which are in the range of 88.0 to 92.0 % by mol and in the range of 94.0 to 97.0 % by weight, respectively, and other properties satisfying the requirements described above. It is more preferred that the polypropylenic resin has a content of an isotactic pentad fraction and a content of a n-heptane insoluble fraction which are in the range of 89.2 to 90.7 % by mol and in the range of 95.0 to 96.0 % by weight, respectively, and satisfy a relation expressed by the following equation:

$$0.750P + 27.625 < H$$

wherein P and H are the same as those described above, and other properties satisfying the requirements described above.

The polypropylenic resin of the present invention may be any of homopolymers of propylene and copolymers of propylene with other olefins so long as the resin satisfies the requirements described above. Examples of the other olefins copolymerized with propylene include ethylene, butene-1, pentene-1, 4-methyl-1-pentene, hexene-1, heptene-1, octene-1, nonene-1, and decene-1. Ethylene is preferable among these olefins. The olefin may be used singly or as a combination of two or more types.

The method of preparing the polypropylenic resin of the present invention is not particularly limited, and various methods which can provide a polypropylene resin satisfying the requirements described above may be used. For example, the polypropylenic resin of the present invention can be obtained by homopolymerizing propylene or copolymerizing propylene with other olefins in the presence of a polymerization catalyst which comprises (A) a solid catalyst component obtained from (a) a magnesium compound obtained by reaction of magnesium metal, an alcohol, and a halogen and/or a compound containing a halogen, (b) a titanium compound, and (c) an electron-donating compound used if necessary, (B) an organometallic compound, and (C) an electron-donating compound used if necessary.

A homogeneous catalyst comprising a metallocene compound containing a metal, such as titanium, zirconium, and hafnium, and a cocatalyst, such as aluminoxane and an ionic compound, may be used as the polymerization catalyst, as well as the Ziegler-type catalyst described above.

In the solid catalyst component of component (A), the magnesium compound of component (a) is obtained by reaction of magnesium metal, an alcohol, and a halogen and/or a compound containing a halogen.

The form of the magnesium metal described above is not particularly limited, and magnesium metal of a desired form, such as a granular form, a ribbon form, or a powder form, can be used. Surface condition of magnesium metal is not particularly limited, but it is preferred that the magnesium metal does not have a layer, such as a layer of magnesium oxide, on the surface thereof.

As the alcohol, a lower alcohol having 1 to 6 carbon atoms is preferably used although any other alcohol may be used as well. Ethanol is particularly preferable because a solid catalyst component which remarkably enhances exhibition of the catalyst performance can be provided. The purity of the alcohol and the content of water in the alcohol are not particularly limited. However, magnesium hydroxide is formed on the surface of magnesium metal when an alcohol containing a large amount of water is used. Therefore, it is preferred that an alcohol containing 1 % or less by weight, more preferably 2,000 ppm or less, of water is used. A smaller content of water is more advantageous.

The type of the halogen or the compound containing a halogen is not particularly limited, and any compound containing a halogen atom in the molecule can be used as the compound containing a halogen. Chlorine, bromine, or iodine is preferably used as the halogen. Iodine is particularly preferable. As the compound containing a halogen, a metal compound containing a halogen is particularly preferable. The form, the shape, and the size of the halogen and/or the compound containing a halogen is not particularly limited, and any form can be used. For example, the halogen and/or the halogen compound may be used in the form of a solution in an alcohol solvent, such as ethanol.

The amount of the alcohol used is selected in the range of 2 to 100 mol, preferably 5 to 50 mol, based on 1 mol of the magnesium metal. When the amount of the alcohol is more than the specified range, it tends to be difficult that a magnesium compound having a favorable morphology is formed. When the amount of the alcohol is less than the specified range, there is the possibility that the reaction with magnesium metal does not proceed smoothly.

The halogen and/or the compound containing a halogen is used generally in an amount of 0.0001 g atom or more, preferably 0.0005 g atom or more, more preferably 0.001 g atom or more, based on 1 g atom of the magnesium metal. When the amount of the halogen or the compound containing a halogen is less than 0.0001 g atom, and the magnesium compound obtained is used without pulverizing it, the amount of the catalyst supported on the solid component and activity of the catalyst decrease, and stereoregularity and morphology of the polymer formed deteriorate. An amount less than the specified range is not preferable because the treatment of pulverization is indispensable. By selecting the amount of the halogen and/or the compound containing a halogen suitably, it is possible to control the particle diameter of the magnesium compound obtained to a specified value.

The reaction of magnesium metal and the halogen and/or the compound containing a halogen itself can be conducted according to a conventional method. For example, a specified magnesium compound can be obtained by reacting magnesium metal, an alcohol, and a halogen and/or a compound containing a halogen under a refluxing condition until generation of hydrogen gas is not found any more, generally for 20 to 30 hours. More specifically, when iodine is used as the halogen, examples of the method include a method of adding magnesium metal and iodine of a solid form to an alcohol, then heating the system under refluxing, a method of adding magnesium metal to an alcohol, then adding an alcohol solution of iodine dropwise to the alcohol, followed by heating the system under refluxing, and a method of heating a solution of an alcohol containing magnesium metal, and then adding an alcohol solution of iodine dropwise to the solution under heating. It is preferred in any of the methods described above that the reaction is conducted under an atmosphere of an inert gas, such as nitrogen gas or argon gas, and, if necessary, in an inert organic solvent, such as a saturated hydrocarbon like n-hexane. For adding magnesium metal, an alcohol, or a halogen and/or a compound containing a halogen, it is not necessary that the whole amount is added to a reactor at the start of the reaction. Instead, the component may be added in separate portions. In a preferred method, the whole amount of an alcohol is added to the reactor at the start of the reaction, and magnesium metal is added in separate several portions.

The method described above is preferable in view of safety because generation of a large amount of hydrogen gas in a short time can be prevented when the method is adopted. Decrease in the size of the reactor can also be enabled by adopting the method. When a large amount of hydrogen gas is generated in a short time, a portion of the alcohol and the halogen and/or the compound containing a halogen is lost by being accompanied with bubbles of hydrogen. This loss of the component can also be prevented by adopting the method described above. Number of the separate portions is decided according to the size of a reactor. In general, the number is preferably 5 to 10 when it is considered that an increased number of separate portions causes more complicated handling. The reaction itself can be conducted according to any of a batch process and a continuous process. As a modified method of the reaction, it is possible to use a method in which the whole amount of an alcohol is placed in a reactor in advance, a small portion of magnesium metal is added to the alcohol, a product formed by the reaction is separated and transferred to a separate vessel, another small portion of magnesium metal is added to the alcohol, and these operations are repeated.

When the magnesium compound thus obtained is used for preparation of the solid catalyst component in the next step, the magnesium compound may be dried before use, or washed with an inert solvent, such as heptane, after being separated by filtration. In any of these cases, the magnesium compound obtained can be used in the next step without pulverization or classification to adjust the particle size to a narrower distribution.

Examples of the titanium compound of component (b) include tetraalkoxytitaniums, such as tetramethoxytitanium, tetraethoxytitanium, tetra-n-propoxytitanium, tetraisopropoxytitanium, tetra-n-butoxytitanium, tetraisobutoxytitanium, tetracyclohexyloxytitanium, and tetraphenoxytitanium; titanium tetrahalides, such as titanium tetrachloride, titanium tetrabromide, and titanium tetraiodide ; alkoxytitanium halides, such as methoxytitanium trichloride, ethoxytitanium trichloride, propoxytitanium trichloride, n-butoxytitanium trichloride, and ethoxytitanium tribromide ; dialkoxytitanium dihalides, such as dimethoxytitanium dichloride, diethoxytitanium dichloride, dipropoxytitanium dichloride, di-n-butoxytitanium dichloride, and diethoxytitanium dibromide ; and trialkoxytitanium monohalides, such as trimethoxytitanium chloride, triethoxytitanium chloride, tripropoxytitanium chloride, and tri-n-butoxytitanium chloride. Among these titanium compounds, titanium compounds containing a larger number of a halogen are preferable. Titanium tetrachloride is particularly preferable among them. The titanium compound may be used singly or as a combination of two or more types.

In the solid catalyst component of component (A) described above, an electron-donating compound may be used as component (c), if necessary.

Examples of the electron-donating compound include organosilicon compounds, esters, thioesters, amines, ketones, nitriles, phosphines, ethers, thioethers, acid anhydrides, acid halides, acid amides, aldehydes, organic acids, and azo compounds.

Examples of the organosilicon compound include diphenyldimethoxysilane, diphenyldiethoxysilane, dibenzyl dimethoxysilane, tetramethoxysilane, tetraethoxysilane, tetraphenoxysilane, methyltrimethoxysilane, methyltriethoxysilane, methyltriphenoxysilane, phenyltrimethoxysilane, phenyltriethoxysilane, benzyltrimethoxysilane, methyl-tert-butyldimethoxysilane, di-tert-butyl-dimethoxysilane, di-tert-butyldiethoxysilane, isopropyl-tert-butyl-dimethoxysilane, methyl-tert-butyldiethoxysilane, methyl(3-ethylpentyl-3)dimethoxysilane, methyl-sec-butyldimethoxysilane, ($\alpha$,$\alpha$-dimethylbenzyl)triethoxysilane, (2-cyclohexylpropyl-2)triethoxysilane, diisobutyldimethoxysilane, methyl(2-methyl-butyl-2)diethoxysilane, ($\alpha$,$\alpha$-dimethylbenzyl)dimethoxysilane, (2-cyclohexylpropyl-2)trimethoxysilane, cyclohexylmethyldimethoxysilane, dicyclopentyldimethoxysilane, methyl(2-methylbutyl-2)dimethoxysilane, (3-ethylpentyl-3)triethoxysilane, tert-butyltrimethoxysilane, sec-butyltrimethoxysilane, tert-butyltriethoxysilane, (2-methylbutyl-2)trimethoxysilane, (2-methylbutyl-2)triethoxysilane, isobutyl-sec-butyldimethoxysilane, di-sec-butyldimethoxysilane, methyl(2-methylbutyl-2)dimethoxysilane, ethyl-tert-butyldimethoxysilane, propyl-tert-butyldimethoxysilane, diisopropyldimethoxysilane, isopropyl(cyclopentylmethyl)dimethoxysilane, tert-butylcyclopentyldimethoxysilane, tert-butylcyclohexyldimethoxysilane, isobutylcyclohexyldimethoxysilane, methyl-p-tolyldimethoxysilane, methyl-o-tolyldimethoxysilane, di(p-tolyl)dimethoxysilane, di(o-tolyl)dimethoxysilane, dibenzyldimethoxysilane, and bis(cyclohexylmethyl)-dimethoxysilane.

Examples of the ester include esters of aromatic dicarboxylic acids, such as monomethyl phthalate, monoethyl phthalate, monopropyl phthalate, monobutyl phthalate, monoisobutyl phthalate, monoamyl phthalate, monomethyl terephthalate, monoethyl terephthalate, monopropyl terephthalate, monobutyl terephthalate, monoisobutyl terephthalate, dimethyl phthalate, diethyl phthalate, dipropyl phthalate, dibutyl phthalate, diisobutyl phthalate, diamyl phthalate, diisoamyl phthalate, methyl ethyl phthalate, methyl isobutyl phthalate, methyl propyl phthalate, ethyl butyl phthalate, ethyl isobutyl phthalate, ethyl propyl phthalate, propyl isobutyl phthalate, dimethyl terephthalate, diethyl terephthalate, dipropyl terephthalate, diisobutyl terephthalate, methyl ethyl terephthalate, methyl isobutyl terephthalate, methyl propyl terephthalate, ethyl butyl terephthalate, ethyl isobutyl terephthalate, ethyl propyl terephthalate, propyl isobutyl terephthalate, dimethyl isophthalate, diethyl isophthalate, dipropyl isophthalate, diisobutyl isophthalate, methyl ethyl isophthalate, methyl isobutyl isophthalate, methyl propyl isophthalate, ethyl butyl isophthalate, ethyl isobutyl isophthalate, ethyl propyl isophthalate, and propyl isobutyl isophthalate ; monoesters such as methyl formate, ethyl formate, methyl acetate, ethyl acetate, vinyl acetate, propyl acetate, octyl acetate, cyclohexyl acetate, ethyl propionate, methyl butyrate, ethyl butyrate, ethyl valerate, methyl chloroacetate, ethyl dichloroacetate, methyl methacrylate, ethyl crotonate, ethyl pivalate, dimethyl maleate, ethyl cylcohexanecarboxylate, methyl benzoate, ethyl benzoate, propyl benzoate, butyl benzoate, octyl benzoate, cyclohexyl benzoate, phenyl benzoate, benzyl benzoate, methyl toluate, ethyl toluate, amyl toluate, ethyl ethylbenzoate, methyl anisate, ethyl anisate, ethyl ethoxybenzoate, ethyl p-butoxybenzoate, ethyl o-chlorobenzoate, and ethyl naphthoate ; and other esters, such as $\gamma$-butyrolactone, $\delta$-valerolactone, coumarine, phthalides, and ethylene carbonate. Examples of the organic acid include benzoic acid, and p-oxybenzoic acid. Examples of the acid anhydride include succinic anhydride, benzoic anhydride, and p-toluic anhydride.

Examples of the ketone include actone, methyl ethyl ketone, methyl isobutyl ketone, acetophenone, benzophenone, and benzoquinone. Examples of the aldehyde include acetaldehyde, propionaldehyde, octylaldehyde, tolualdehyde, benzaldehyde, and naphthylaldehyde. Examples of the acid chloride include acetyl chloride, acetyl bromide, propionyl chloride, butyryl chloride, isobutyryl chloride, 2-methylpropionyl chloride, valeryl chloride, isovaleryl chloride, hexanoyl chloride, methylhexanoyl chloride, 2-ethylhexanoyl chloride, octanoyl chloride, decanoyl chloride, undecanoyl chloride, hexadecanoyl chloride, octadecanoyl chloride, benzylcarbonyl chloride, cyclohexanecarbonyl chloride, malonyl dichloride, succinyl dichloride, pentanedioleyl dichloride, hexanedioleyl dichloride, cyclohexanedicarbonyl dichloride, benzoyl chloride, benzoyl bromide, methylbenzoyl chloride, phthaloyl chloride, isophthaloyl chloride, terephthaloyl chloride, and benzene-1,2,4-tricarbonyl trichloride. Examples of the ether include methyl ether, ethyl ether, isopropyl ether, n-butyl ether, isopropyl methyl ether, isopropyl ethyl ether, tert-butyl ethyl ether, tert-butyl n-propyl ether, tert-butyl n-butyl ether, tert-amyl methyl ether, tert-amyl ethyl ether, amyl ether, tetrahydrofuran, anisole, diphenyl ether, and ethyleneglycol butyl ether. Examples of the acid amide include acetamide, benzamide, and toluamide. Examples of the amine include tributylamine, N,N'dimethylpiperidine, tribenzylamine, aniline, pyridine, pyrroline, and tetramethylethylenediamine. Examples of the nitrile include acetonitrile, benzonitrile, and tolunitrile. Examples of the azo compound include azo compounds having a sterically hindered substituent group bonded to the azo linkage, such as 2,2'-azobis(2-methylpropane), 2,2'-azobis(2-ethylpropane), and 2,2'-azobis(2-methylpentane).

Among these compounds, organosilicon compounds, esters, ketones, ethers, thioethers, acid anhydrides, and acid halides, are preferable. Organosilicon compounds, such as diphenyldimethoxysilane, phenyltriethoxysilane, and cyclohexylmethyldimethoxysilane , diesters of aromatic dicarboxylic acids, such as diethyl phthalate, di-n-butyl phthalate, and diisobutyl phthalate, and alkyl esters of aromatic monocarboxylic acids, such as benzoic acid, p-methoxybenzoic acid, p-ethoxybenzoic acid, and toluic acid, are particularly preferable. The electron-donating compound may be used singly or as a combination of two or more kinds.

The method of preparing the solid catalyst component of component (A) is not particularly limited, and the solid catalyst component can be prepared according to a conventional method using (a) the magnesium compound, (b) the titanium compound, and (c) the electron-donating compound used if necessary, all described above.

The solid catalyst component of component (A) thus prepared generally has the following compositions: magnesium / titanium: in the range of 2 to 100 as the ratio of atoms; a halogen / titanium: in the range of 5 to 100 as the ratio of atoms; and an electron-donating compound / a titanium compound: in the range of 0.1 to 10 as the ratio of mols. It is also preferred that the solid catalyst component has a pore volume of 0.4 cc/g or more and a specific surface area of 300 m$^2$/g or more. When the pore volume or the specific surface area is at the outside of the respective specified ranges, the catalyst activity may be decreased.

The pore volume and the specific surface area can be obtained, for example, from the volume of absorbed nitrogen gas according to the BET method [refer to Journal of the American Chemical Society, Volume 60, Page 309 (1983)].

As the organometallic compound of component (B) in the polymerization catalyst used in the present invention, any organometallic compound containing a metal element belonging to any of 1 to 3 groups of the Periodic Table can be advantageously used. Examples of the metal belonging to any of 1 to 3 groups of the Periodic Table include lithium, sodium, potassium, zinc, cadmium, and aluminum. Aluminum is particularly preferable among these elements.

Examples of the organometallic compound of component (B) include organoaluminum compounds, alkyllithiums, such as methyllithium, ethyllithium, propyllithium, and butyllithium, and dialkylzincs, such as dimethylzinc, diethylzinc, dipropylzinc, and dibutylzinc.

Examples of the organoaluminum compound described above include compounds represented by the general formula (III):

$$AlR_nX_{3-n} \qquad\qquad (III)$$

wherein R indicates an alkyl group having 1 to 20 carbon atoms, a cycloalkyl group having 6 to 20 carbon atoms, or an aryl group having 6 to 20 carbon atoms, X indicates a halogen atom, and n indicates a number of 1 to 3; R may be the same or different when a plurality of R are comprised; and X may be the same or different when a plurality of X are comprised. Examples of the compound represented by the general formula (III) include trialkylaluminums, such as trimethylaluminum, triethylaluminum, triisopropylaluminum, triisobutylaluminum, and trioctylaluminum; dialkylaluminum monohalides, such as diethylaluminum monochloride, dipropylaluminum monochloride, diisobutylaluminum monochloride, and dioctylaluminum monochloride ; and alkylaluminum sesquihalides, such as ethylaluminum sesquichloride.

The organometallic compound of component (B) may be used singly or as a combination of two or more types.

In the polymerization catalyst described above, an electron-donating compound may be additionally used as component (C), if necessary. Examples of the electron-donating compound include the same compounds as those described as examples of the electron-donating compound of component (c) used in the preparation of the solid catalyst component of component (A), if necessary.

The polypropylenic resin of the present invention can be obtained by homopolymerization of propylene or copolymerization of propylene with other olefins in the presence of the polymerization catalyst described above.

The form of the polymerization or the copolymerization is not particularly limited, and slurry polymerization, gas phase polymerization, bulk polymerization, solution polymerization, or suspension polymerization can be adopted.

When the gas phase polymerization is adopted, the polymerization pressure is selected generally in the range of 5 to 60 kg/cm$^2$G, preferably in the range of 10 to 40 kg/cm$^2$G, and the polymerization temperature is selected generally in the range of 40 to 120°C, preferably in the range of 60 to 90°C.

Molecular weight of the polymer can be adjusted by a conventional method, such as adjustment of concentration of hydrogen in a polymerization reactor. The polymerization time varies depending on the polymerization temperature, and cannot be generally described. A polymerization time of 5 minutes to 10 hours is sufficient in many cases.

In the polymerization, the polymerization may be started by introducing a material monomer or material monomers into a reactor immediately after specified relative amounts of components (A) to (C) constituting the polymerization catalyst are mixed to bring the components into contact with each other in the reactor, or may be started by introducing a material monomer or material monomers into a reactor after specified relative amounts of components (A) to (C) are mixed to bring the components into contact with each other in the reactor and the mixture is aged there for 0.2 to 3 hours. The components constituting the polymerization catalyst can be supplied in the form of suspension in an inert solvent or a monomer. Preliminary polymerization may also be conducted in advance by bringing a small amount of propylene into contact with the solid catalyst component, if necessary.

In the present invention, a post-treatment can be conducted according to a conventional method after the polymerization is finished. In the gas phase polymerization, for example, a stream of nitrogen or the like can be passed through polymer powder discharged from a polymerization reactor after finishing the polymerization in order to remove volatile matters, such as the remaining monomer or monomers. Polymer formed may be pelletized by using an extruder, if necessary. When the polymer prepared is pelletized, a small amount of water, an alcohol, or the like, can be added to the polymer in order to inactivate the polymerization catalyst completely. In the bulk polymerization, polymer can also be pelletized after the monomer or monomers are completely removed from the polymer discharged from a reactor.

To the polypropylenic resin thus obtained, various additives, such as antioxidants, heat stabilizers, weathering stabilizers, chlorine scavengers, slipping agents, anti-blocking agents, nucleation agents, antistatic agents, inorganic or organic fillers, or coloring agents may be added, if necessary. The film of the present invention is obtained by forming a film from the polypropylenic resin described above according to a conventional method.

The polypropylenic resin of the present invention is advantageously used for production of a melt-extruded film having a thickness of about 10 to about 500 μm when the film is prepared, for example, by the film forming process with T-die casting under a high speed condition, such as a pulling speed of 150 m/min or more. Of course, the polypropylenic resin can also be used for production of the same film when the film is prepared by the same process under a lower speed condition, such as a pulling speed of lower than 150 m/min. The polypropylenic resin can also be used advantageously for forming at least one layer in preparation of a multi-layer film by a film forming process with co-extrusion because of the advantageous properties of the resin described above.

For forming a film, any film forming process using melt-extrusion of a resin can be used and the film forming process is not particularly limited otherwise. Any process including the film forming process with T-die casting, the film forming process with inflation, or the like, can be used. Among these processes, the film forming process with T-die casting is preferable because a film can be produced at a higher speed using a larger film forming apparatus.

The polypropylenic resin of the present invention can also be advantageously used as a material of a film which is generally called a biaxially stretched film. The biaxially stretched film is prepared by treating a material sheet obtained by melt-extrusion with stretching to the longitudinal direction and stretching to the transverse direction.

The film of the present invention is obtained by forming the polypropylenic resin described above into a film, and the resultant film generally has:

(1a) a content of an isotactic pentad fraction as an index of stereo-regularity and a content of a n-heptane insoluble fraction which are in a range of 85.0 to 92.0 % by mol and in a range of 86.0 to 97.0 % by weight, respectively, and satisfy a relation expressed by equation (IV):

$$0.750P+26.000 < H \qquad\qquad (IV).$$

wherein P indicates the content of an isotactic pentad fraction in % by mol and H indicates the content of a n-heptane insoluble fraction in % by weight; and
(2b) a melt index which is in a range of 1 to 25 g/10 min, and satisfies a relation expressed by equation (V):

$$\tau \leq 0.63\text{-}0.025MI \qquad\qquad (V)$$

wherein MI indicates the melt index, and $\tau$ represents a relaxation time in second obtained by a frequency dispersion measurement at 175°C at a frequency of $\omega_0 = 10^0$ rad/sec.

For evaluation of the properties, a film is subject to an annealing treatment for 24 hours at 40°C immediately after it is prepared, then conditioned at the temperature of $23\pm2$°C in the humidity of $50\pm10$ % for 16 hours or more, and used for the measurements at the same temperature in the same humidity.

The content of a n-heptane insoluble fraction, the melt index, and the relaxation time of a film are obtained by the same methods as those used to obtain the corresponding values of the polypropylenic resin described above. However, in the measurement of the content of a n-heptane insoluble fraction, 3 g of pieces of a film cut to the size of 1 cm $\times$ 1 cm are used in place of 3 g of the pulverized pellets.

To summarize the advantages obtained by the invention, when the polypropylene resin of the present invention is formed into a film by a melt-extrusion process, such as the film forming process with T-die casting or the film forming process by inflation, the resin provides a film having improved transparency and impact resistance, and sufficient slipping property and anti-blocking property while proper characteristics of a polypropylenic film are not adversely affected, and moreover, exhibiting very small change in the properties even when the film is prepared under a high speed condition.

The invention will be understood more readily with reference to the following examples; however, these examples are intended to illustrate the invention and are not to be construed to limit the scope of the invention.

For evaluation of the properties of a film, a film was subject to an annealing treatment for 24 hours at 40°C immediately after it was prepared, and then conditioned at a temperature of $23\pm2$°C in a humidity of $50\pm10$ % for 16 hours or more. Measurements were conducted at the same temperature in the same humidity according to the following methods.

(1) Content of n-heptane insoluble fraction (H), melt index (MI), and relaxation time ($\tau$)

These properties of a film were measured by the same methods as those used to obtain the corresponding properties of the polypropylenic resin.

(2) Impact resistance (film impact)

Impact strength was evaluated by measuring strength at break under impact using a film impact tester produced by Toyoseiki Seisakusho Co., Ltd. with a 1/2 inch impact head.

(3) Tensile modulus

Tensile modulus was measured according to the method of Japanese Industrial Standard K-7127 under the following conditions:

| | |
|---|---|
| cross-head speed | 500 mm/min |
| direction of measurement | machine direction (MD direction) |
| load cell | 10 kg. |

(4) Transparency (haze value)

Transparency was measured according to the method of Japanese Industrial Standard K-7105.

(5) Anti-blocking property (blocking strength)

Anti-blocking property was evaluated by measuring the maximum load required for separation by shearing of two test pieces of a film which had been put together under a load of 36 $g/cm^2$ at 60°C for 3 hours. Conditions of the measurement were as following:

| | |
|---|---|
| test speed | 20 mm/min. |
| load cell | 2 kg. |

(6) Slipping property

Slipping property was measured using an apparatus for measurement of friction angle produced by Toyoseiki Seisakusho Co., Ltd. Conditions of the measurement were as following:

| | |
|---|---|
| surface of the measurement | metal roll surface / metal roll surface |
| speed of inclination | 2.7°/sec |
| weight of a sled | 1 kg |
| sectional area of a sled | 65 $cm^2$ |
| pressure between the surfaces | 15 $g/cm^2$ |

Example 1

(1) Preparation of magnesium compound (a)

A glass reactor (inner volume: 12 liter) equipped with a stirrer was thoroughly purged with nitrogen. In the reactor, about 4860 g of ethanol, 32 g of iodine, and 320 g of magnesium metal were placed, and the mixture was allowed to react under a refluxing condition with stirring, to obtain a solid reaction product. The reaction mixture containing the solid reaction product was dried in vacuo, and magnesium compound (solid product) (a) was obtained.

(2) Preparation of solid catalyst component (A)

In a glass three-necked flask (inner volume: 5 liter) purged thoroughly with nitrogen, 160 g of magnesium compound (a) obtained in (1) described above (without pulverization), 800 ml of purified heptane, 24 ml of silicon tetrachloride, and 23 ml of diethyl phthalate, were placed. While the reaction system was kept at 90°C, 770 ml of titanium tetrachloride was added under stirring, and the reaction was allowed to proceed at 110°C for 2 hours. A solid component formed by the reaction was separated, and washed with purified heptane of 80°C. To the washed product, 1220 ml of titanium tetrachloride was added, and the reaction was allowed to proceed at 110°C for 2 hours. The product was washed with purified heptane thoroughly, and solid catalyst component (A) was obtained.

(3) Pre-treatment for polymerization

In a reactor (inner volume: 500 liter) equipped with a stirrer, 230 liter of n-heptane was placed. To the reactor, 25 kg of solid catalyst component (A) obtained in (2) described above was added. Then, triethylaluminum in an amount corresponding to 0.6 mol and cyclohexylmethyldimethoxysilane in an amount corresponding to 0.4 mol, each based on 1 mol of the titanium atom in solid catalyst component (A), were added. Propylene was introduced into the reaction system until the partial pressure of propylene reached 0.3 $kg/cm^2G$. The reaction was allowed to proceed at 20°C for 4 hours. When the reaction was finished, solid catalyst component (A) was washed with n-heptane several times, and kept stirring for 24 hours while carbon dioxide was supplied.

(4) Polymerization of propylene

Into a polymerization reactor (inner volume: 200 liter) equipped with a stirrer, solid catalyst component (A) pre-treated in (3) described above in an amount corresponding to 3 mmol of titanium atom / hour, triethylaluminum in an amount of 0.37 mol/hour, and diphenyldimethoxysilane in an amount of 4.9 mmol/hour, were supplied. The polymerization was allowed to proceed at 80°C under the partial pressure of propylene of 28 $kg/cm^2G$. Hydrogen gas was added to adjust the molecular weight to a specified value. Thus, a polypropylenic resin was obtained. Properties of the resin were measured according to the methods described above. The results are shown in Table 1.

(5) Preparation of a film

The polypropylenic resin obtained in (4) described above was formed into a film using a film forming apparatus of 75 mmØ produced by Mitsubishi Jukogyo Co., Ltd. under the conditions of the processing temperature of 260°C, the chill roll temperature of 30°C, and the pulling speed of 150 m/min, and a film of 25 μm thickness was prepared. Properties of this film are shown in Table 1. This film had a melt index of 6.5 g/10 min.

Example 2

A polypropylenic resin was prepared, and the resin prepared was formed into a film according to the same procedures as those in Example 1 except that cyclohexylmethyldimethoxysilane was used in place of diphenyldimethoxysilane in (4) polymerization of propylene.
Properties of the polypropylenic resin and the film are shown in Table 1.

Example 3

Polymerization of propylene was conducted according to the same procedures as those in Example 1 except that cyclohexylmethyldimethoxysilane was used in place of diphenyldimethoxysilane in (4) polymerization of propylene, and a second stage polymerization was conducted thereafter. Hydrogen gas was supplied to reactors of the first stage polymerization and the second stage polymerization to adjust the molecular weight of the polymer to a specified value. Ratio of the amounts of the polymer formed in the first stage polymerization and the polymer formed in the second stage polymerization was adjusted to 65/35 by weight. The polypropylenic resin thus obtained was formed into a film according to the same procedures as those in Example 1.
Properties of the polypropylenic resin and the film are shown in Table 1.

Example 4

(1) Preparation of magnesium compound (a)

Magnesium compound (a) was prepared according to the same procedures as those in Example 1 (1).

(2) Preparation of solid catalyst component (A)

Solid catalyst component (A) was prepared according to the same procedures as those in Example 1 (2).

(3) Pre-treatment for polymerization

In a reactor (inner volume: 500 liter) equipped with a stirrer, 230 liter of n-heptane was placed. To the reactor, 25 kg of solid catalyst component (A) obtained in (2) described above was added. Then, triethylaluminum in an amount corresponding to 1.0 mol and cyclohexylmethyldimethoxysilane in an amount corresponding to 0.6 mol, each based on 1 mol of titanium atom in solid catalyst component (A), were added. Propylene was introduced into the reaction system until the partial pressure of propylene reached 0.3 $kg/cm^2G$. The reaction was allowed to proceed at 20°C for 4 hours. When the reaction was finished, solid catalyst component (A) was washed with n-heptane several times, and kept stirring for 24 hours while carbon dioxide was supplied.

(4) Polymerization of propylene

Into a polymerization reactor (inner volume: 200 liter) equipped with a stirrer, solid catalyst component (A) pre-treated in (3) described above in an amount corresponding to 3 mmol of titanium atom / hour, triethylaluminum in an amount of 0.4 mol/hour, and cyclohexylmethyldimethoxysilane in an amount of 11 mmol/hour, were supplied. The polymerization was allowed to proceed at 80°C under the partial pressure of propylene of 28 kg/cm$^2$G. Hydrogen gas was added to adjust the molecular weight to a specified value. Thus, a polypropylenic resin was obtained.

(5) Preparation of a film

A film was prepared according to the same procedures as those in Example 1 (5).
Properties of the polypropylenic resin and the film are shown in Table 1.

Example 5

A polypropylenic resin was prepared, and the resin prepared was formed into a film according to the same procedures as those in Example 4 except that solid catalyst component (A) pre-treated in (3) described above in an amount corresponding to 1.3 mmol of titanium atom / hour, triethylaluminum in an amount of 0.2 mol/hour, and cyclohexylmethyldimethoxysilane in an amount of 6 mmol/hour, were supplied in (4) polymerization of propylene.
Properties of the polypropylenic resin and the film are shown in Table 1.

Example 6

A polypropylenic resin was prepared, and the resin prepared was formed into a film according to the same procedures as those in Example 4 except that cyclohexylmethyldimethoxysilane was supplied in an amount corresponding to 1.65 mmol of titanium atom / hour in (4) polymerization of propylene.
Properties of the polypropylenic resin and the film are shown in Table 1.

Example 7

(1) Preparation of solid catalyst component (A) and pre-treatment for polymerization

Solid catalyst component (A) was prepared according to the same procedures as those in Example 4 (2). Using solid catalyst component (A) thus prepared, a pre-treatment for polymerization was conducted according to the same procedures as those in Example 4 (3) except that carbon dioxide was not supplied.

(2) Polymerization of propylene

Into a polymerization reactor (inner volume: 200 liter) equipped with a stirrer, n-heptane in an amount of 11.5 liter/ hour, solid catalyst component (A) pre-treated in (1) described above in an amount corresponding to 0.2 mmol of titanium atom / hour, triethylaluminum in an amount of 80 mmol/hour, and cyclohexylmethyldimethoxysilane in an amount of 1 mmol/hour, were supplied. Polymerization was allowed to proceed at 80°C under the partial pressure of propylene of 7 kg/cm$^2$G. Hydrogen gas was added to adjust the molecular weight to a specified value. Slurry obtained by the polymerization was continuously discharged into 40 liter of n-heptane containing 6 liter of butanol. The monomer and the catalyst were removed from the product at 65°C by a batch process. A solid component and a liquid component were separated by a centrifuge, and the solid component was washed with n-heptane of 65°C, and then dried.

(3) Preparation of a film

A film was prepared according to the same procedures as those in Example 4 (5).
Properties of the polypropylenic resin and the film are shown in Table 1.

Table 1

| Example | 1 | 2 | 3 | 4 | 5 | 6 | 7 |
|---|---|---|---|---|---|---|---|
| properties of resin | | | | | | | |
| content of isotactic pentad fraction (P) (% by mol) | 90.0 | 90.1 | 89.9 | 89.9 | 90.3 | 87.5 | 87.0 |
| content of n-heptane insoluble fraction (H) (% by weight) | 95.4 | 96.0 | 95.6 | 95.5 | 96.1 | 93.6 | 95.8 |
| melt index (MI) (g/10 min) | 6.0 | 6.1 | 7.0 | 6.9 | 6.2 | 6.1 | 6.6 |
| relaxation time ($\tau$) (second) | 0.46 | 0.41 | 0.47 | 0.45 | 0.44 | 0.45 | 0.45 |
| properties and qualities of film | | | | | | | |
| content of n-heptane insoluble fraction (H) (% by weight) | 94.1 | 94.7 | 94.2 | 94.1 | 94.8 | 92.3 | 94.4 |
| melt index (MI) (g/10 min) | 6.5 | 6.6 | 7.5 | 7.5 | 6.7 | 6.6 | 7.0 |
| relaxation time ($\tau$) (second) | 0.42 | 0.37 | 0.42 | 0.40 | 0.40 | 0.41 | 0.41 |
| film impact (kJ/m) | 15 | 17 | 14 | 16 | 13 | 14 | 11 |
| tensile modulus (MPa) | 1000 | 1000 | 1100 | 1020 | 1040 | 950 | 1030 |
| haze value (%) | 2.9 | 1.9 | 3.0 | 2.8 | 3.0 | 3.1 | 3.6 |
| blocking strength (Pa) | 11 | 21 | 12 | 10 | 13 | 25 | 15 |
| static friction coefficient (slipping property) | 0.11 | 0.15 | 0.09 | 0.14 | 0.16 | 0.10 | 0.28 |

As is shown in Table 1, all the films obtained were excellent in all of impact resistance, tensile modulus, haze value, anti-blocking property, and slipping property, and had excellent qualities with well-balanced properties.

Comparative Example 1

(1) Preparation of magnesium compound (a)

Magnesium compound (a) was prepared according to the same procedures as those in Example 4 (1).

(2) Preparation of solid catalyst component (A)

Solid catalyst component (A) was prepared by the same procedures as those in Example 4 (2) except that 29 ml of di-n-butyl phthalate was used in place of 23 ml of diethyl phthalate used in Example 4 (2).

(3) Pre-treatment for polymerization

Pre-treatment for polymerization was conducted according to the same procedures in Example 4 (3) except that solid catalyst component (A) obtained in (2) described above was used as the solid catalyst component, and dicyclopentyldimethoxysilane was used as the silicon compound.

(4) Polymerization of propylene

Into a polymerization reactor (inner volume: 200 liter) equipped with a stirrer, solid catalyst component (A) pre-treated in (3) described above in an amount corresponding to 3 mmol of titanium atom / hour, triethylaluminum in an amount of 0.4 mol/hour, and dicyclopentyldimethoxysilane in an amount of 1 mmol/hour, were supplied. The polymerization was allowed to proceed at 80°C under the partial pressure of propylene of 28 kg/cm²G. Hydrogen gas was added to adjust the molecular weight to a specified value. Thus, a polypropylenic resin was obtained.

(3) Preparation of a film

A film was prepared according to the same procedures as those in Example 4 (5).
Properties of the polypropylenic resin and the film are shown in Table 2.

Comparative Example 2

A polypropylenic resin was prepared, and the resin prepared was formed into a film according to the same procedures as those in Comparative Example 1 except that cyclohexylmethyldimethoxysilane was used as the silicon compound in the pre-treatment for polymerization in (3), and cyclohexylmethyldimethoxysilane was supplied as the silicon compound in an amount of 0.275 mmol/hour in (4) polymerization of propylene.

Properties of the polypropylenic resin and the film are shown in Table 2.

Comparative Example 3

A polypropylenic resin was prepared, and the resin prepared was formed into a film according to the same procedures as those in Comparative Example 2 except that cyclohexylmethyldimethoxysilane was supplied as the silicon compound in an amount of 0.385 mmol/hour in (4) polymerization of propylene.

Properties of the polypropylenic resin and the film are shown in Table 2.

Comparative Example 4

A polypropylenic resin was prepared, and the resin prepared was formed into a film according to the same procedures as those in Comparative Example 2 except that cyclohexylmethyldimethoxysilane was supplied as the silicon compound in an amount of 0.550 mmol/hour in (4) polymerization of propylene.

Properties of the polypropylenic resin and the film are shown in Table 2.

Table 2

| Comparative Example | 1 | 2 | 3 | 4 |
|---|---|---|---|---|
| properties of resin | | | | |
| content of isotactic pentad fraction (P) (% by mol) | 94.6 | 86.4 | 88.5 | 89.8 |
| content of n-heptane insoluble fraction (H) (% by weight) | 97.9 | 91.5 | 93.2 | 94.2 |
| melt index (MI) (g/10 min) | 6.0 | 6.7 | 6.5 | 7.1 |
| relaxation time ($\tau$) (second) | 0.43 | 0.44 | 0.43 | 0.41 |
| properties and qualities of film | | | | |
| content of n-heptane insoluble fraction (H) (% by weight) | 96.9 | 90.0 | 91.8 | 92.8 |
| melt index (MI) (g/10 min) | 6.5 | 7.2 | 6.9 | 92.8 |
| relaxation time ($\tau$) (second) | 0.38 | 0.39 | 0.38 | 0.37 |
| film impact (kJ/m) | 3 | 11 | 5 | 7 |
| tensile modulus (MPa) | 1290 | 890 | 1060 | 1090 |
| haze value (%) | 3.9 | 3.3 | 3.3 | 3.5 |
| blocking strength (Pa) | 3 | 53 | 19 | 10 |
| static friction coefficient (slipping property) | 0.52 | 0.12 | 0.12 | 0.43 |

The resin and the film obtained in Comparative Example 1 both had a higher stereoregularity and a larger content of a n-heptane insoluble fraction than the respective ranges specified in the present invention, and were inferior in impact resistance and slipping property. The resin and the film obtained in Comparative Example 2 both had a lower content of a n-heptane insoluble fraction than the respective ranges specified in the present invention, and were inferior in stiffness and anti-blocking property. The resin and the film obtained in Comparative Example 3 had a stereoregularity and an n-heptane insoluble fraction which did not satisfy the relation expressed by equation (I), and were inferior in impact strength. The resin and the film obtained in Comparative Example 4 had a stereoregularity and an n-heptane insoluble fraction which did not satisfy the relation expressed by equation (I), and were inferior in impact strength and slipping property.

**Claims**

1. A polypropylenic resin which is usable for preparing a film and has:

(1) a content of an isotactic pentad fraction as an index of stereo-regularity and a content of a n-heptane insoluble fraction which are in a range of 85.0 to 92.0 % by mol and in a range of 93.0 to 97.0 % by weight, respectively, and satisfies a relation expressed by an equation:

$$0.750P + 27.125 < H$$

wherein P indicates the content of an isotactic pentad fraction in % by mol and H indicates the content of a n-heptane insoluble fraction in % by weight, and

(2) a melt index which is in a range of 1 to 20 g/10 minutes and satisfies a relation expressed by an equation:

$$\tau \leq 0.65 - 0.025MI$$

wherein MI indicates the melt index (JIS K-7210 at 230°C under a load of 2,160 g), and $\tau$ indicates a relaxation time in second obtained by a frequency dispersion measurement at a temperature of 175°C at a frequency of $\omega_0 = 10^0$ rad/sec using a rotating rheometer with a cone plate (cone angle 0.1 rad, 25 mm$\phi$).

2. A polypropylenic resin according to Claim 1, wherein the content of an isotactic pentad fraction and the content of a n-heptane insoluble fraction, are in a range of 88.0 to 92.0 % by mol and in a range of 94.0 to 97.0 % by weight, respectively.

3. A polypropylenic resin according to Claim 1, wherein the content of an isotactic pentad fraction and the content of a n-heptane insoluble fraction are in a range of 89.2 to 90.7 % by mol and in a range of 95.0 to 96.0 % by weight, respectively, and satisfies a relation expressed by an equation:

$$0.750P + 27.625 < H$$

wherein P and H are the same as those described in Claim 1.

4. A polypropylenic resin according to Claim 1, wherein the melt index is in the range of 2 to 15 g/10 minutes.

5. A polypropylenic resin according to Claim 1, wherein the melt index is in the range of 3 to 10 g/10 minutes.

6. A polypropylenic resin according to Claim 1, wherein the melt index satisfies a relation expressed by an equation:

$$\tau \leq 0.60 - 0.025MI$$

wherein MI and $\tau$ are the same as those described in Claim 1.

7. A polypropylenic resin according to Claim 1, wherein the polypropylenic resin for a film is prepared by polymerization of propylene or copolymerization of propylene with one or more types of olefin in the presence of a polymerization catalyst comprising (A) a solid catalyst component obtained from (a) a magnesium compound obtained by reaction of magnesium metal, an alcohol, and a halogen and/or a compound containing a halogen, (b) a titanium compound, and (c) an electron-donating compound used if necessary, (B) an organometallic compound, and (C) an electron-donating compound used if necessary.

8. A polypropylenic resin according to Claim 7, wherein the titanium compound is titanium tetrachloride.

9. A polypropylenic resin according to Claim 7, wherein the organometallic compound is an organoaluminum compound.

10. A film prepared from a polypropylenic resin having:

(1) a content of an isotactic pentad fraction as an index of stereo-regularity and a content of a n-heptane insoluble fraction which are in a range of 85.0 to 92.0 % by mol and in a range of 93.0 to 97.0 % by weight, respectively, and satisfies a relation expressed by an equation:

$$0.750P + 27.125 < H$$

wherein P indicates the content of an isotactic pentad fraction in % by mol and H indicates the content of a n-heptane insoluble fraction in % by weight, and
(2) a melt index which is in a range of 1 to 20 g/10 minutes and satisfies a relation expressed by an equation:

$$\tau \leq 0.65 - 0.025MI$$

wherein MI indicates the melt index, and $\tau$ indicates a relaxation time in second obtained by a frequency dispersion measurement at a temperature 175°C at a frequency of $\omega_0 = 10^0$ of rad/sec.

11. A film prepared from a polypropylenic resin, wherein the film has:

(1a) a content of an isotactic pentad fraction as an index of stereo-regularity and a content of a n-heptane insoluble fraction which are in a range of 85.0 to 92.0 % by mol and in a range of 86.0 to 97.0 % by weight, respectively, and satisfies a relation expressed by an equation:

$$0.750P + 26.000 < H$$

wherein P indicates the content of an isotactic pentad fraction in % by mol and H indicates the content of a n-heptane insoluble fraction in % by weight, and
(2a) a melt index which is in a range of 1 to 25 g/10 minutes and satisfies a relation expressed by an equation:

$$\tau \leq 0.63 - 0.025MI$$

wherein MI indicates the melt index (JIS K-7210 at 230°C under a load of 2,160 g), and $\tau$ indicates a relaxation time in second obtained by a frequency dispersion measurement at a temperature of 175°C at a frequency of $\omega_0 = 10^0$ rad/sec using a rotating rheometer with a cone plate (cone angle 0.1 rad, 25 mm$\phi$).

## Patentansprüche

1. Polypropylenharz, welches zur Herstellung einer Folie verwendbar ist, und folgendes aufweist:

(1) einen Gehalt einer isotaktischen Pentad-Fraktion als einen Index der Stereoregularität und einen Gehalt einer in n-Heptan unlöslichen Fraktion, welche im Bereich von 85,0 bis 92,0 Mol-% bzw. im Bereich von 93,0 bis 97,0 Gew.-% liegen und die durch folgende Gleichung ausgedrückte Beziehung erfüllen:

$$0,750P + 27,125 < H$$

worin P den Gehalt einer isotaktischen Pentad-Fraktion in Mol-% angibt und H den Gehalt einer in n-Heptan unlöslichen Fraktion in Gew.-% angibt, und

(2) einen Schmelzindex, welcher in einem Bereich von 1 bis 20 g/10 Minuten liegt und die durch folgende Gleichung ausgedrückte Beziehung erfüllt:

$$\tau \leq 0,65 - 0,025MI$$

worin MI für den Schmelzindex (JIS K-7210 bei 230°C unter einer Last von 2 160 g) steht und $\tau$ eine Relaxationszeit in Sekunden angibt, erhalten durch eine Frequenzdispersionsmessung bei einer Temperatur von 175°C und einer Frequenz von $\omega 0 = 100$ rad/s unter Verwendung eines Rotationsrheometers mit einer Kegelplatte (Kegelwinkel: 0,1 rad, 25 mmØ).

2. Polypropylenharz gemäß Anspruch 1, wobei der Gehalt an isotaktischer Pentad-Fraktion und der Gehalt an in n-Heptan unlöslicher Fraktion in einem Bereich von 88,0 bis 92,0 Mol-% bzw. im Bereich von 94,0 bis 97,0 Gew.-% liegen.

3. Polypropylenharz gemäß Anspruch 1, wobei der Gehalt an isotaktischer Pentad-Fraktion und der Gehalt an in n-Heptan unlöslicher Fraktion in einem Bereich von 89,2 bis 90,7 Mol-% bzw. im Bereich von 95,0 bis 96,0 Gew.-% liegen, und welches die durch folgende Gleichung ausgedrückte Beziehung erfüllt:

$$0,750P + 27,625 < H$$

worin P und H die gleiche Bedeutung besitzen, wie es in Anspruch 1 beschrieben ist.

4. Polypropylenharz gemäß Anspruch 1, wobei der Schmelzindex im Bereich von 2 bis 15 g / 10 min liegt.

5. Polypropylenharz gemäß Anspruch 1, wobei der Schmelzindex im Bereich von 3 bis 10 g / 10 min liegt.

6. Polypropylenharz gemäß Anspruch 1, wobei der Schmelzindex die durch folgende Gleichung ausgedrückte Beziehung erfüllt:

$$\tau \leq 0,60 - 0,025MI$$

worin MI und $\tau$ die gleiche Bedeutung besitzen, wie in Anspruch 1 beschrieben.

7. Polypropylenharz gemäß Anspruch 1, wobei das Polypropylenharz für eine Folie hergestellt wird durch Polymerisieren von Propylen oder Copolymerisieren von Propylen mit einer oder mehrerer Olefinarten in Gegenwart eines Polymerisationskatalysators, welcher (A) eine feste Katalysatorkomponente, erhalten aus (a) einer Magnesiumverbindung, welche durch die Reaktion von Magnesiummetall, einem Alkohol und einem Halogen und/oder einer ein Halogen enthaltenden Verbindung erhalten wird, (b) einer Titanverbindung und (c) einer Elektronen abgebenden Verbindung, welche nach Bedarf verwendet wird, (B) eine organometallische Verbindung und (C) eine Elektronen abgebende Verbindung, welche nach Bedarf verwendet wird, umfaßt.

8. Polypropylenharz gemäß Anspruch 7, wobei die Titanverbindung Titantetrachlorid ist.

9. Polypropylenharz gemäß Anspruch 7, wobei die Organometallverbindung eine Organoaluminiumverbindung ist.

10. Folie, hergestellt aus einem Polypropylenharz mit:

(1) einem Gehalt einer isotaktischen Pentad-Fraktion als einen Index der Stereoregularität und einen Gehalt einer in n-Heptan unlöslichen Fraktion, welche im Bereich von 85,0 bis 92,0 Mol-% bzw. im Bereich von 93,0 bis 97,0 Gew.-% liegen und die durch folgende Gleichung ausgedrückte Beziehung erfüllen:

$$0,750P + 27,125 < H$$

worin P den Gehalt einer isotaktischen Pentad-Fraktion in Mol-% angibt und H den Gehalt einer in n-Heptan unlöslichen Fraktion in Gew.-% angibt, und

(2) einem Schmelzindex, welcher in einem Bereich von 1 bis 20 g/10 Minuten liegt und die durch folgende Gleichung ausgedrückte Beziehung erfüllt:

$$\tau \leq 0,65 - 0,025MI$$

worin MI für den Schmelzindex steht und $\tau$ eine Relaxationszeit in Sekunden angibt, erhalten durch eine Frequenzdispersionsmessung bei einer Temperatur von 175°C und einer Frequenz von $\omega 0 = 100$ rad/s.

11. Folie, hergestellt aus einem Polypropylenharz, wobei die Folie aufweist:

(1a) einen Gehalt einer isotaktischen Pentad-Fraktion als einen Index der Stereoregularität und einen Gehalt einer in n-Heptan unlöslichen Fraktion, welche im Bereich von 85,0 bis 92,0 Mol-% bzw. im Bereich von 86,0 bis 97,0 Gew.-% liegen und die durch folgende Gleichung ausgedrückte Beziehung erfüllen:

$$0,750P + 26,000 < H$$

worin P den Gehalt einer isotaktischen Pentad-Fraktion in Mol-% angibt und H den Gehalt einer in n-Heptan unlöslichen Fraktion in Gew.-% angibt, und

(2a) einen Schmelzindex, welcher in einem Bereich von 1 bis 25 g/10 Minuten liegt und die durch folgende Gleichung ausgedrückte Beziehung erfüllt:

$$\tau \leq 0,63 - 0,025MI$$

worin MI für den Schmelzindex (JIS K-7210 bei 230°C unter einer Last von 2 160 g) steht und $\tau$ eine Relaxationszeit in Sekunden angibt, erhalten durch eine Frequenzdispersionsmessung bei einer Temperatur von 175°C und einer Frequenz von $\omega 0 = 100$ rad/s unter Verwendung eines Rotationsrheometers mit einer Kegelplatte (Kegelwinkel: 0,1 rad, 25 mmØ).

## Revendications

1. Résine polypropylénique qui est utilisable pour préparer un film et possède:

(1) une teneur en une fraction de pentade isotactique comme indice de stéréorégularité et une teneur en une fraction insoluble dans le n-heptane, qui se situent respectivement dans un intervalle allant de 85,0 à 92,0 % en moles et dans un intervalle allant de 93,0 à 97,0 % en poids, et satisfont à la relation exprimée par une équation:

$$0,750P + 27,125 < H$$

dans laquelle P indique la teneur en une fraction de pentade isotactique en % en moles et H indique la teneur en une fraction insoluble dans le n-heptane en % en poids, et

(2) un indice de fusion qui se situe dans un intervalle allant de 1 à 20 g/10 minutes et satisfait à la relation exprimée par l'équation:

$$\tau \leq 0,65 - 0,025 \ IF$$

dans laquelle IF indique l'indice de fusion (JIS K-7210 à 230°C sous une charge de 2160g), et $\tau$ indique le temps de relaxation en secondes obtenu par une mesure de dispersion de fréquence à une température de 175°C à une fréquence de $\omega_0, = 10°$ rad/s , en utilisant un rhéomètre rotatif avec une plaque en cône ( angle de cône 0,1 rad.; 25 mm de diam.).

2. Résine polypropylénique selon la revendication 1, dans laquelle la teneur en une fraction de pentade isotactique et la teneur en une fraction insoluble dans le n-heptane sont respectivement comprises dans l'intervalle allant de 88,0 à 92,0 % en moles et dans l'intervalle allant de 94,0 à 97,0 % en poids.

3. Résine polypropylénique selon la revendication 1, dans laquelle la teneur en une fraction de pentade isotactique et la teneur en une fraction insoluble dans le n-heptane sont respectivement comprises dans l'intervalle allant de 89,2 à 90,7 % en moles et dans l'intervalle allant de 95,0 à 96,0 % en poids , et satisfont à la relation exprimée par l'équation:

$$0,750P + 27,625 < H$$

dans laquelle P et H sont tels que ceux décrits dans la revendication 1.

4. Résine polypropylénique selon la revendication 1, dans laquelle l'indice de fusion est compris dans l'intervalle allant de 2 à 15 g/10 minutes.

5. Résine polypropylénique selon la revendication 1, dans laquelle l'indice de fusion est compris dans l'intervalle allant de 3 à 10 g/10 minutes.

6. Résine polypropylénique selon la revendication 1, dans laquelle l'indice de fusion satisfait à la relation exprimée par l'équation:

$$\tau \leq 0,60 - 0,025 \, IF$$

dans lauelle IF et $\tau$ ont les mêmes significations que celles décrites dans la revendication 1.

7. Résine polypropylénique selon la revendication 1, dans laquelle on prépare la résine polypropylénique pour un film par polymérisation du propylène ou copolymérisation du propylène avec un ou plusieurs types d'oléfines en présence d'un catalyseur de polymérisation comprenant (A) un composant catalyseur solide obtenu à partir de (a) un composé du magnésium obtenu par réaction du métal magnésium, d'un alcool et d'un halogène ou d'un composé contenant un halogène, (b) un composé du titane et (c) un composé donneur d'électrons utilisé si nécessaire, (B) un composé organométallique et (C) un composé donneur d'électrons utilisé si nécessaire.

8. Résine polypropylénique selon la revendication 7, dans laquelle le composé du titane est le tétrachlorure de titane.

9. Résine polypropylénique selon la revendication 7, dans laquelle le composé organométallique est un composé organoaluminique.

10. Film préparé à partir d'une résine polypropylénique ayant:

(1) une teneur en une fraction de pentade isotactique comme indice de stéréorégularité et une teneur en une fraction insoluble dans le n-heptane, qui se situent respectivement dans un intervalle allant de 85,0 à 92,0 % en moles et dans un intervalle allant de 93,0 à 97,0 % en poids, et satisfont à la relation exprimée par une équation:

$$0,750P + 27,125 < H$$

dans laquelle P indique la teneur en une fraction de pentade isotactique en % en moles et H indique la teneur en une fraction insoluble dans le n-heptane en % en poids, et
(2) un indice de fusion qui se situe dans un intervalle allant de 1 à 20 g/10 minutes et satisfait a la relation exprimée par l'équation:

$$\tau \leq 0,65 - 0,025 \, IF$$

dans laquelle IF indique l'indice de fusion , et $\tau$ indique le temps de relaxation en secondes obtenu par une mesure de dispersion de fréquence à une température de 175°C à une fréquence de $\omega_0 = 10°$ rad/s.

11. Film préparé à partir d'une résine polypropylénique dans lequel le film possède:

(1a) une teneur en une fraction de pentade isotactique comme indice de stéréorégularité et une teneur en une fraction insoluble dans le n-heptane, qui se situent respectivement dans un intervalle allant de 85,0 à 92,0 % en moles et dans un intervalle allant de 86,0 à 97,0 % en poids, et satisfont à la relation exprimée par une équation:

$$0,750P + 26,000 < H$$

dans laquelle P indique la teneur en une fraction de pentade isotactique en % en moles et H indique la teneur en une fraction insoluble dans le n-heptane en % en poids, et

(2a) un indice de fusion qui se situe dans un intervalle allant de 1 à 25 g/10 minutes et satisfait à la relation exprimée par l'équation:

$$\tau \leq 0,63 - 0,025 \; IF$$

dans laquelle IF indique l'indice de fusion (JIS K-7210 à 230°C sous une charge de 2160g), et $\tau$ indique le temps de relaxation en secondes obtenu par une mesure de dispersion de fréquence à une température de 175°C à une fréquence de $\omega_0 = 10°$ rad/s en utilisant un rhéomètre rotatif avec une plaque en cône ( angle de cône 0,1 rad.; 25 mm de diam.).